# EUROPÄISCHE PATENTANMELDUNG

(11) **EP 1 154 215 A1**
(43) Veröffentlichungstag der Anmeldung: **14.11.2001**
(21) Anmeldenummer: 00109688.2
(22) Anmeldetag: 08.05.2000
(51) Int. Cl.: F27D 17/00, F27D 23/00, C21C 5/40

(54) **Schliessring**

(71) Anmelder: OSCHATZ GMBH, 45143 Essen (DE)
(72) Erfinder: Kaschub, Hartwig, 45155 Essen (DE)
(74) Vertreter: Rohmann, Michael, Dr.

(57) **Zusammenfassung**

Schließring (1) zwischen einem Ofen, insbesondere einem Konverter (2), und einer mit Abstand über diesem angeordneten Kaminhaube (3). Der Oberrand (6) des Schließringes (1) weist einen Abstand von der Kaminhaube (3) auf und bildet mit der Kaminhaube (3) einen Ringspalt (7). Es sind über den Umfang des Schließringes (1) verteilte und an den Schließring (1) angeschlossene Dichtelemente (8) vorgesehen. Die Dichtelemente (8) sind mit vorgegebener Andruckkraft gegen die Kaminhaube (3) andrückbar.

## Beschreibung

Die Erfindung betrifft einen Schließring zwischen einem Ofen, insbesondere einem Konverter, und einer mit Abstand über diesem angeordneten Kaminhaube, wobei der Oberrand des Schließringes einen Abstand von der Kaminhaube aufweist und mit der Kaminhaube einen Ringspalt bildet. - Der Begriff Ofen meint vor allem einen Industrieofen. Es liegt im Rahmen der Erfindung, dass der Schließring höhenverstellbar eingerichtet ist. - Derartige Schließringe sollen in ihrer abgesenkten Stellung eine störungsfreie Überführung des Primärgases aus dem Ofen bzw. Konverter in die Kaminhaube und den daran angeschlossenen Kamin gewährleisten. Mit anderen Worten soll weder Primärgas nach außen, noch Falschluft nach innen gelangen. Dieser optimale Zustand ist jedoch nicht ohne weiteres erzielbar, weil insbesondere zwischen dem Oberrand des Schließringes und der Kaminhaube wechselweise Überdruckimpulse und Unterdruckimpulse auftreten. Es ist auch nicht möglich, den Ringspalt zwischen dem Oberrand des Schließringes und der Kaminhaube unbegrenzt klein zu wählen, da es in diesem Fall infolge des unvermeidbaren mechanischen Kontaktes, vor allem bei der Höhenverstellung des Schließringes, zu Beschädigungen des Schließringes und/oder der Kaminhaube kommen kann.

Der eingangs beschriebene Schließring, von dem die Erfindung ausgeht (DE 31 06 791 C2) ist im Bereich seines Oberrandes mit einer Einrichtung zur Zuführung eines den Ringspalt abdichtenden, gas- und/oder dampfförmigen Sperrmediums ausgerüstet. Vorzugsweise besteht diese Einrichtung zur Zuführung des Sperrmediums aus einem Kranz von gleichsinnig zur Kaminhaube gerichteten Düsen. Der Schließring besteht aus ringförmigen Kühlrohren und zweckmäßigerweise ist die Einrichtung zur Zuführung des Sperrmediums zwischen zwei benachbarten Kühlrohren angeordnet. Dieser bekannte Schließring hat sich grundsätzlich bewährt. Nichtsdestoweniger sind die Maßnahmen zur Abdichtung des Ringspaltes relativ aufwendig und verbesserungsfähig.

Demgegenüber liegt der Erfindung das technische Problem zugrunde, einen Schließring der eingangs genannten Art anzugeben, mit dem auf einfache und wenig aufwendige Weise eine sehr effektive und funktionssichere Abdichtung des Ringspaltes zwischen Ofen und Kaminhaube ohne Verwendung eines Sperrmediums möglich ist.

Zur Lösung dieses technischen Problems lehrt die Erfindung einen Schließring der eingangs beschriebenen Art, welcher dadurch gekennzeichnet ist, dass über den Umfang des Schließringes verteilte und an den Schließring angeschlossene Dichtelemente vorgesehen sind und dass die Dichtelemente mit vorgegebener Andruckkraft gegen die Kaminhaube andrückbar sind. - Es liegt im Rahmen der Erfindung, dass die Dichtelemente relativ zum Schließring bewegbar bzw. in Richtung auf die Kaminhaube verschiebbar sind und somit mit vorgegebener Andruckkraft gegen die Kaminhaube andrückbar sind. Die Dichtelemente liegen also zweckmäßigerweise gleichsam unter Vorspannung an der Kaminhaube an. Dabei sind die Dichtelemente im Bereich des Ringsspaltes, das heißt über dem Ringspalt, den Ringspalt abdichtend, angeordnet. Zweckmäßigerweise sind die Dichtelemente am Oberrand des Schließringes angeschlossen. Vorzugsweise weisen die Dichtelemente die Form von Ringabschnitten auf, die über den Umfang des Schließringes verteilt vorgesehen sind. Es liegt im Rahmen der Erfindung, dass der Schließring als Ganzes als heb- und senkbarer Schließring ausgeführt ist.

Nach sehr bevorzugter Ausführungsform der Erfindung ist zumindest eine Einstellvorrichtung zum Einstellen der Andruckkraft vorgesehen. Mit einer solchen Einstellvorrichtung ist also die Kraft einstellbar, mit der ein Dichtelement gegen die Kaminhaube angedrückt wird. Zweckmäßigerweise ist jedem Dichtelement zumindest eine solche Einstellvorrichtung zugeordnet. - Nach einer bevorzugten Ausführungsform der Erfindung ist die Andruckkraft mit Hilfe zumindest eines Federelementes aufbringbar. Zweckmäßigerweise ist jedem Dichtelement ein solches Federelement zugeordnet. Bei dieser Ausführungsform kann durch Einstellung der Federkraft eine definierte Andruckkraft ausgewählt werden, mit der ein Dichtelement gegen die Kaminhaube gedrückt wird. - Nach einer weiteren bevorzugten Ausführungsform der Erfindung ist die Andruckkraft mit Hilfe zumindest eines Gewichtsstückes aufbringbar. Zweckmäßigerweise ist das Gewichtsstück dabei an einen Hebel angeschlossen, welcher Hebel aufgrund der auf das Gewichtsstück einwirkenden Schwerkraft gegen das Dichtelement gedrückt wird, welches Dichtelement auf diese Weise an die Kaminhaube andrückbar ist. Durch die Auswahl der Masse des Gewichtsstückes und/oder der Ausgestaltung des Hebels ist bei dieser Ausführungsform die Andruckkraft einstellbar; mit der ein Dichtelement gegen die Kaminhaube angedrückt wird.

Der Schließring und die Kaminhaube bestehen zweckmäßigerweise aus metallischen Werkstoffen oder im Wesentlichen aus metallischen Werkstoffen. Es liegt im Rahmen der Erfindung, dass die Dichtelemente aus einem Dichtwerkstoff bestehen, der weicher ist als das Material der Kaminhaube. Material der Kaminhaube meint bei dieser Ausführungsform insbesondere das Material, aus dem die Abschnitte der Kaminhaube gefertigt sind, an welche die Dichtelemente angedrückt werden. Weicherer Werkstoff meint im Rahmen der Erfindung einen Werkstoff, der bei Reibkontakt zweier Bauteile aus zwei unterschiedlichen Werkstoffen den größeren Abrieb aufweist. Erfindungsgemäß wird der Dichtwerkstoff im Hinblick auf eine Verschleißminimierung bezüglich der Kaminhaube ausgewählt. Vorzugsweise bestehen die Dichtelemente aus einem Metall. Zweckmäßigerweise sind die Dichtelemente als Blechelemente ausgeführt, die den Ringspalt abdichtend abdecken und bevorzugt die Form von Ringabschnitten haben, die über den Umfang des Schließringes verteilt sind. Nach sehr bevorzugter Ausführungsform der Erfindung bestehen die Dichtelemente aus Kupfer.

Es liegt im Rahmen der Erfindung, dass die Dichtelemente gekühlt werden. Eine bevorzugte Ausführungsform, der im Rahmen der Erfindung besondere Bedeutung zukommt, ist dadurch gekennzeichnet, dass Dichtelemente mit zumindest einem von einem Kühlmedium durchströmten Bauelement in wärmeleitendem Kontakt stehen. Vorzugsweise handelt es sich bei dem Bauelement um ein von einem Kühlmedium durchströmtes Kühlrohr. Zweckmäßigerweise verläuft das Kühlrohr über den gesamten Umfang des Schließringes. Es liegt im Rahmen der Erfindung, dass der Schließring aus übereinander angeordneten ringförmigen Kühlrohren besteht. Vorzugsweise stehen die Dichtelemente in wärmeleitendem Kontakt mit dem oberen ringförmigen Kühlrohr des Schließringes. Auf diese Weise wird eine sehr effektive und funktionssichere Kühlung der Dichtelemente erzielt.

Der Erfindung liegt die Erkenntnis zugrunde, dass mit der erfindungsgemäßen Lehre eine einfache, wenig aufwendige und nichtsdestoweniger wirksame Abdichtung des Ringspaltes zwischen einem Ofen und einer Kaminhaube erreicht wird. Aufgrund der variablen Einstellung der Andruckkräfte, mit denen die Dichtelemente gegen die Kaminhaube gedrückt werden sowie durch Auswahl des Dichtungswerkstoffes der Dichtelemente kann eine sehr effektive Dichtwirkung bei nichtsdestoweniger weitgehender Verschleißminimierung der Bauteile gewährleistet werden. Nachteilhafte Beschädigungen des Schließringes und/oder der Kaminhaube stellen sich nicht ein. Der erfindungsgemäße Schließring gewährleistet im Übrigen eine sehr wartungsfreundliche und reparaturfreundliche Handhabung.

Nachfolgend wird die Erfindung anhand einer lediglich ein Ausführungsbeispiel darstellenden Zeichnung näher erläutert. Es zeigen in schematischer Darstellung:
- Fig. 1: einen Längsschnitt durch eine Hälfte eines Schließringes zwischen einem Konverter und einer Kaminhaube,
- Fig. 2: einen Ausschnitt aus Fig. 1 in vergrößertem Maßstab,
- Fig. 3: den Gegenstand nach Fig. 2 in einer anderen Ausführungsform und
- Fig. 4: eine Draufsicht auf den Gegenstand nach Fig. 3 aus Richtung des Pfeils A.

Der erfindungsgemäße Schließring ist im Ausführungsbeispiel nach den Figuren zwischen einem Konverter 2 und einer Kaminhaube 3 angeordnet, welche Kaminhaube 3 sich mit Abstand über dem Konvertermund 4 befindet. Die Kaminhaube 3 geht an ihrem oberen Ende in einen nicht dargestellten Konverterkamin über. Im Ausführungsbeispiel weist die Kaminhaube 3 an ihrem unteren Ende einen konischen Abschnitt auf, über welchen sie in ein nach oben gerichtetes zylindrisches Teil 5 übergeht. Der erfindungsgemäße Schließring 1 ist mit Hilfe einer nicht dargestellten Betätigungsanordnung heb- und senkbar und somit höhenverstellbar. In dem in den Figuren dargestellten Zustand befindet sich der Schließring 1 in abgesenkter Stellung und ist mit seinem Unterrand auf dem Konvertermund 4 abgestützt. Der Oberrand 6 des Schließringes 1 weist einen Abstand von der Kaminhaube 3 auf und bildet mit dieser Kaminhaube 3 bzw. mit deren zylindrischen Teil 5 einen Ringspalt 7.

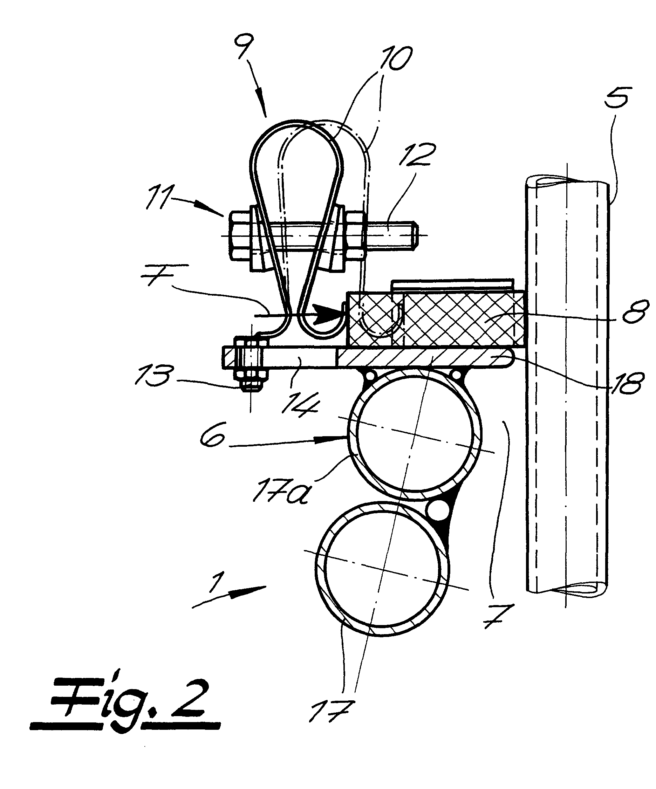

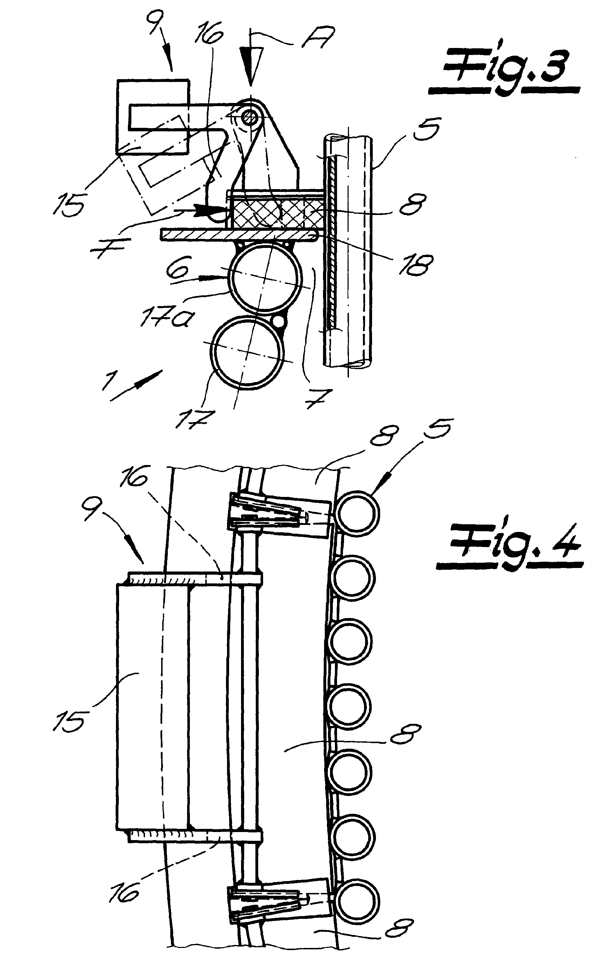

Erfindungsgemäß sind über den Umfang des Schließringes 1 verteilte und an den Schließring 1 angeschlossene Dichtelemente 8 vorgesehen. Diese Dichtelemente 8 werden mit vorgegebener Andruckkraft gegen die Kaminhaube 3 bzw. gegen dessen zylindrisches Teil 5 angedrückt. Die Dichtelemente 8 stehen also gleichsam unter Vorspannung in Kontakt mit der Kaminhaube 3 bzw. dessen zylindrischem Teil 5. Die Dichtelemente 8 sind somit relativ zum Schließring in Richtung zur Kaminhaube, vorzugsweise in horizontaler Richtung, verschiebbar. Dabei weist vorzugsweise und im Ausführungsbeispiel jedes Dichtelement 8 zweckmäßigerweise eine Einstellvorrichtung 9 zum definierten Einstellen der Andruckkraft auf. Vorzugsweise und im Ausführungsbeispiel sind die Dichtelemente 8 am Oberrand 6 des Schließringes 1 angeschlossen und sind somit über dem Ringspalt 7, den Ringspalt 7 abdichtend angeordnet. Bei den Dichtelementen 8 handelt es sich bevorzugt um Metallplatten oder Blechplatten, die zweckmäßigerweise die Form von Ringabschnitten (Fig. 4) aufweisen. Nach sehr bevorzugter Ausführungsform handelt es bei den Dichtelementen 8 um Kupferplatten. Die Kaminhaube 3 und insbesondere das zylindrische Teil 5 der Kaminhaube 3 besteht vorzugsweise aus Stahl. Es liegt im Rahmen der Erfindung, dass die Dichtelemente 8 aus einem Dichtwerkstoff bestehen, der weicher ist als das Material der Kaminhaube 3 bzw. als das Material des zylindrischen Teils 5 der Kaminhaube 3. Es liegt fernerhin im Rahmen der Erfindung, dass die Dichtelemente 8 während ihres Einsatzes einem zunehmenden Abrieb bzw. einem zunehmenden Verschleiß aufgrund des Reibkontaktes mit der Kaminhaube 3 bzw. mit dem zylindrischen Teil 5 der Kaminhaube 3 unterliegen. Dies ist insbesondere in den Figuren 2 und 3 erkennbar. In ausgezogener Strichführung ist hier der ursprüngliche Zustand des Dichtelementes 8 dargestellt, während der Zustand des Dichtelementes 8 nach längerem Einsatz strichpunktiert dargestellt ist. Durch den Reibkontakt mit der Kaminhaube 5 und den resultierenden Abrieb verkürzt sich somit die Breite des Dichtelementes 8. Während der Verschleiß an der Kaminhaube 3 und an dem übrigen Schließring 1 erfindungsgemäß möglichst minimiert wird, liegt es im Rahmen der Erfindung, dass der Abrieb bzw. Verschleiß der Dichtelemente 8 aufgrund des Reibkontaktes mit der Kaminhaube 3 beabsichtigt ist und zur effektiven Dichtwirkung beiträgt.

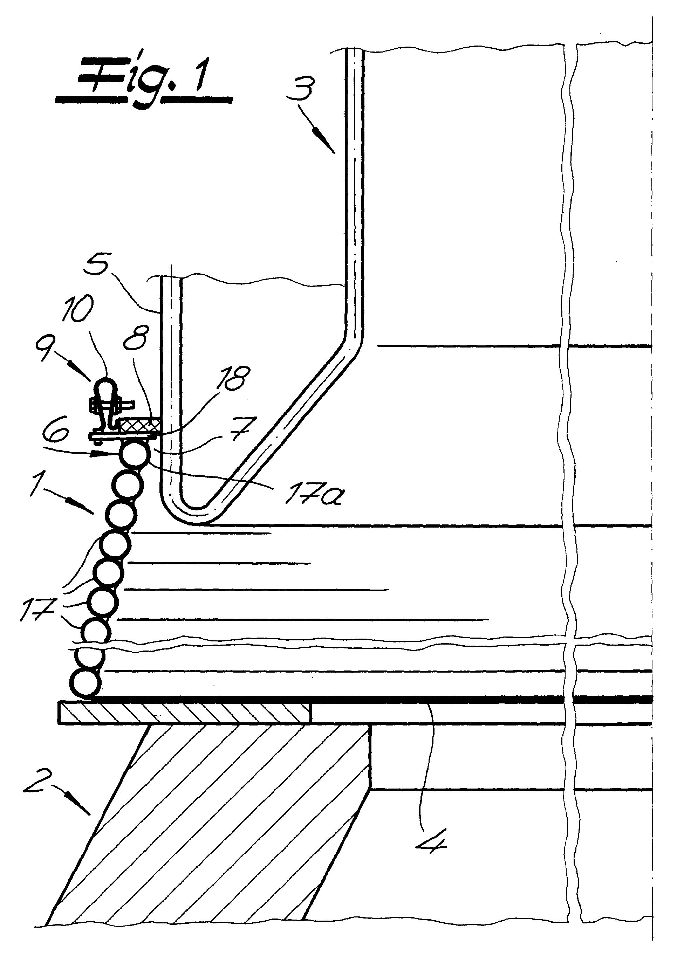

Im Ausführungsbeispiel nach den Figuren 1 und 2 wird die Andruckkraft F mit Hilfe eines Federelementes 10 aufgebracht. Zweckmäßigerweise und im Ausführungsbeispiel ist an jedes Dichtelement 8 zumindest ein solches Federelement 10 angeschlossen. Unter der Einwirkung eines Federelementes 10 wird ein Dichtelement 8 mit vorgegebener Andruckkraft F gegen die Kaminhaube 3 bzw. gegen ihr zylindrisches Teil 5 gedrückt. Vorzugsweise und im Ausführungsbeispiel ist jedem Federelement 10 eine Einstellvorrichtung 11 zum definierten Einstellen der Andruckkraft F zugeordnet. Die Einstellvorrichtung 11 weist im Ausführungsbeispiel nach den Figuren 1 und 2 den Federelementen 10 zugeordnete Stellschrauben 12 auf, mit denen die jeweilige Federkraft einstellbar ist. Zur Einstellvorrichtung 11 gehören in den Figuren 1 und 2 jedoch auch an die Federelemente 10 angeschlossene Einstellbolzen 13, die in einem Langloch 14 verschiebbar sowie arretierbar sind.

Im Ausführungsbeispiel nach den Figuren 3 und 4 wird die Andruckkraft mit Hilfe eines Gewichtsstückes 15 aufgebracht. Nach dieser Ausführungsform ist jedem Dichtelement 8 ein Gewichtsstück 15 zugeordnet und unter Einwirkung der Schwerkraft auf das Gewichtsstück 15 drücken Hebelarme 16 das Dichtelement 8 mit vorgegebener Andruckkraft F gegen die Kaminhaube 3 bzw. gegen das zylindrische Teil 5 der Kaminhaube 3.

Vorzugsweise und im Ausführungsbeispiel besteht der Schließring 1 aus übereinander angeordneten ringförmigen Kühlrohren 17, die von einem Kühlmedium durchströmt werden. Zweckmäßigerweise und im Ausführungsbeispiel stehen die Dichtelemente 8 in wärmeleitendem Kontakt mit dem oberen Kühlrohr 17a. Die Dichtelemente 8 können mit Hilfe dieses oberen Kühlrohres 17a auf effektive Weise gekühlt werden. Im Ausführungsbeispiel nach den Figuren ist die Anordnung so getroffen, dass an dem oberen Kühlrohr 17a eine Metallplatte 18 angeschlossen ist. Die Metallplatte 18 besteht bevorzugt aus Stahl und ist vorzugsweise an das Kühlrohr 17a angeschweißt. Die Metallplatte 18 ist im Ausführungsbeispiel in einer horizontalen Ebene und zweckmäßigerweise mit Abstand zu der Kaminhaube 3 bzw. zu dem zylindrischen Teil 5 angeordnet. Die Dichtelemente 8 sind, in wärmeleitendem Kontakt mit der Metallplatte 18 stehend, auf der Metallplatte 18 in Richtung Kaminhaube 3 verschiebbar bzw. an die Kaminhaube 3 andrückbar.

## Patentansprüche

1. Schließring (1) zwischen einem Ofen, insbesondere einem Konverter (2) und einer mit Abstand über diesem angeordneten Kaminhaube (3),
wobei der Oberrand (6) des Schließringes (1) einen Abstand von der Kaminhaube (3) auf weist und mit der Kaminhaube (3) einen Ringspalt (7) bildet,
wobei über den Umfang des Schließringes (1) verteilte und an den Schließring (1) angeschlossene Dichtelemente (8) vorgesehen sind,
wobei die Dichtelemente (8) jeweils als Ganzes relativ zum Schließring (1) verschiebbar sind und
wobei die Dichtelemente (8) mit vorgegebener Andruckkraft gegen die Kaminhaube (3) andrückbar sind.

2. Schließring nach Anspruch 1, **dadurch gekennzeichnet, dass** zumindest eine Einstellvorrichtung (9) zum Einstellen der Andruckkraft vorgesehen ist.

3. Schließring nach einem der Ansprüche 1 oder 2, **dadurch gekennzeichnet, dass** die Andruckkraft mit Hilfe zumindest eines Federelementes (10) aufbringbar ist.

4. Schließring nach einem der Ansprüche 1 bis 3, **dadurch gekennzeichnet, dass** die Andruckkraft mit Hilfe zumindest eines Gewichtsstückes (15) aufbringbar ist.

5. Schließring nach einem der Ansprüche 1 bis 4, **dadurch gekennzeichnet, dass** die Dichtelemente (8) aus einem Dichtwerkstoff bestehe, der weicher ist als das Material der Kaminhaube 3.

6. Schließring nach einem der Ansprüche 1 bis 5, **dadurch gekennzeichnet, dass** die Dichtelemente (8) aus einem Metall bestehen.

7. Schließring nach einem der Ansprüche 1 bis 6, **dadurch gekennzeichnet, dass** Dichtelemente 8 mit zumindest einem von einem Kühlmedium durchströmten Bauelement in wärmeleitendem Kontakt stehen.
